# EUROPEAN PATENT APPLICATION

(11) **EP 1 480 406 A1**
(43) Date of publication of application: **24.11.2004**
(21) Application number: 03011343.5
(22) Date of filing: 19.05.2003
(51) Int. Cl.: H04L 29/06, H04L 12/64

(54) **Confinement of data transfers to a local area network**

(71) Applicant: Sony International (Europe) GmbH, 10785 Berlin (DE)
(72) Inventor: Szucs, Paul, 70327 Stuttgart (DE)
(74) Representative: Körber, Martin, Dipl.-Phys.

(57) **Abstract**

The present invention provides a system for enforcing a confinement of a data transfer to devices within a local area network (1) with steps for verifying on the occasion of a data request that the device providing the data and the device receiving the data are located within the same local area network (S2, S3), verifying that the network path established for the data transfer is located within the local area network (1), and effecting a data transfer for both verifications being valid.

## Description

The present invention relates to a technique for restricting the transfer of data to between hosts located within the very same local area network. In particular, the present invention relates to a technique inhibiting a data transfer from a local area network to a further local area network, a wide area network or a public network.

The present state of the art in digital technology allows to transfer content, i.e. movies, music, video games, software or the like, between devices of a home environment or a between consumers which are connected by a public network like for instance the Internet. Unlike analogue copies which degrade with each sequential copy that is made, a digital copy of a given content remains as good as the original. The content industry is therefore looking for comprehensive copy protection facilities, which restrict the technical possibilities of copying content corresponding to legal regulations.

As digital home networks become more widespread, it is necessary to apply copy protection to content in the consumer domain. Certain types of digital network technology exist, e.g. IEEE1394 with DTCP (Digital Transmission Content Protection), to provide a secure home environment for content in form of digital home networks. But such measures rely in part on the physical limitations of the underlying network technology for their acceptance. With other network technologies, e.g. those using IP (Internet Protocol), it is much more difficult to impose the usage rule of confinement to the user's home network.

One common component of a copy-protection system is network "link encryption". In such a system, devices on a network which are to exchange copy-protected content first authenticate each other as being compliant to the link encryption system, then the content exchange is carried out on the network such that only the previously authenticated devices can usefully decrypt and use the content.

A respective copy-protection system does not completely resolve all remaining threats like e.g. the "dormitory threat", where two users do indeed connect devices on the same IP sub-net to exchange content. It also does not prevent the "tunnel threat", where the original network protocol is encapsulated with the same or different network protocol for the purpose of by-passing the local network restriction.

Besides putting a stop to any unauthorised copying of high value content, most industry as well as private users are generally interested in preventing any unauthorised data transfer beyond the limits of their trusted local domain, particularly when confidential data are concerned.

It is therefore an object of the present invention to provide a technique which prevents data from being transferred beyond a trusted local domain.

The above object is achieved by the invention as defined in the independent claims.

This includes a method for enforcing a confinement of a data transfer to devices within a local area network with steps for verifying on the occasion of a data request that the device providing the data and the device receiving the data are located within the same local area network, verifying that the network path established for the data transfer is located within the local area network, and effecting a data transfer for both verifications being valid.

This further includes a data transfer confinement software program product comprising a series of physical state elements which are adapted to be processed by a data processing means of a network node, as for instance a host or the like such, that a method according to present invention is implemented on the network.

Further, the above object is achieved by a host for use in a local area network, with a data providing means for providing data which transfer is to be confined to the local area network the host is connected to, and a network connection parameter examination means for examining the admissibility of a network connection established for the data transfer according to a method according to present invention.

The above object is further advantageously achieved by a local area network comprising a data transfer confinement means for confining a data transfer from a first node on the network to a second node on the network according to a method of the present invention.

The invention advantageously allows to implement usage right and access right restrictions as well as data security policies with a minimum of technical expenditure.

Additional advantageous features of the present invention are claimed in the respective sub-claims.

Any device connected to a local area network is uniquely identifiable therein by its network address. And as further the format of a network address allows to identify the type of the network, the step for verifying that the device providing the data and the device receiving the data are located within the same network advantageously includes sub-steps for identifying the source network address of the device providing the data, verifying that the source network address is a local area network address, identifying the destination network address of the device being intended for receiving the data, and verifying that the destination network address is a local area network address.

As a data transfer path is limited to within a given local area network when the data source device and the data receiving device are both connected to the same local area network, the step for verifying that the device providing the data and the device receiving the data are located within the same network advantageously includes a further sub-step of verifying that the source network address belongs to the same local area network than the destination network address for confining the data transfer path to the respective local area network.

A data transfer to a public or Wide Area Network is successfully prevented by inhibiting a data transfer when verifying that the source network address is not a local area network address or that the destination network address is not a local area network address. For preventing data being transferred over further local area networks or further subnets of a present local area network, a data transfer is preferably inhibited when verifying that the source network address and the destination network address belong to different networks or subnets within a local network.

To prevent any manipulation of the data source device and data receiving device network addresses, the network connection parameters are preferably protected prior to effecting the data transfer, whereby this protection may effectively be implemented by applying a standard protection protocol like the IPsec Authentication Header protocol.

To improve systems for enforcing copy protection of data or content, the data to be transferred are advantageously checked in a first step if they require a copy protection and if they do not require a copy protection, the data transfer is effected without a confinement to the local area network or subnet.

As fraudulent distribution of copy-protected data is a major issue in consumer domains, the local area network to which the data transfer is confined is preferably a consumer domain network.

In the following description, the present invention is explained in more detail with respect to special embodiments and in relation to the enclosed drawings, in which
- Figure 1: shows an example for an application of the present invention in a copy protection system,
- Figure 2: is a flow diagram showing the steps of a method for enforcing a copy protection in the system of Figure 1 by implementing a method according to the present invention,
- Figure 3: is a flow diagram showing the procedure steps according to an embodiment of the present invention,
- Figure 4: shows a typical data transfer scenario for an IPv4 home network connected to a public network,
- Figure 5: is a flow diagram showing an application of the present invention for a data transfer confinement within an IPv4 home network,
- Figure 6: shows a typical data transfer scenario for an IPv6 home network connected to a public network, and
- Figure 7: is a flow diagram showing an application of the present invention for a data transfer confinement within an IPv6 home network.

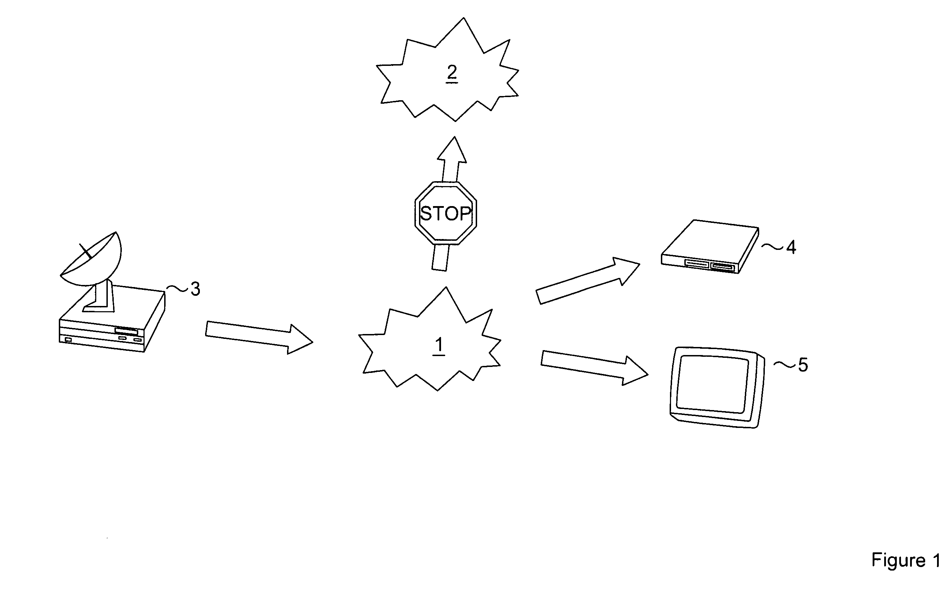

Figure 1 illustrates the problem definition underlying the present invention by way of example. A source device 3 provides data for one or more sink devices 4 and 5 via a local area network 1. Both types of devices, i.e. the source and the sink devices are hereto equipped with a network interface allowing to send and/or receive data via a network connection. The devices may be any kind of electronic devices like e.g. a consumer product as a satellite TV receiver, a DVD (Digital Versatile Disk) player, a data disk, an audio or video system, a computer, a camcorder but also a refrigerator, a stove or the like. Source devices may access data or content from within a local area network like e.g. from a hard disk or from an external source like a DVD or a broadcasting station. A respective network connecting consumer products in a private domain is referred to as a consumer domain network, personal private network or home network.

In the representation of Figure 1 a satellite TV receiver 3 acts as a source device which is required to transfer a copy-protected content stream via the local network 1 to a recorder 4 and/or a display device 5, each acting as a sink device. As the usage rights do not allow to distribute the data to further users, any data transfer to a different network 2, like e.g. to a further local network of a different user or to a public network or wide area network as for instance the Internet has to be inhibited. The confinement of a data transfer to within a local area network not only applies to copy protected data but to any data which are not to be distributed to any where outside the local network. This may apply to only some special data, like e.g. confidential data but also to all data which are requested from a data sink external to the local area network 1 from a data source 3 internal to the local area network 1. A need for a confinement of a data transfer to only within a given local area network arises therefore not only from content copy protection but also from general data security considerations.

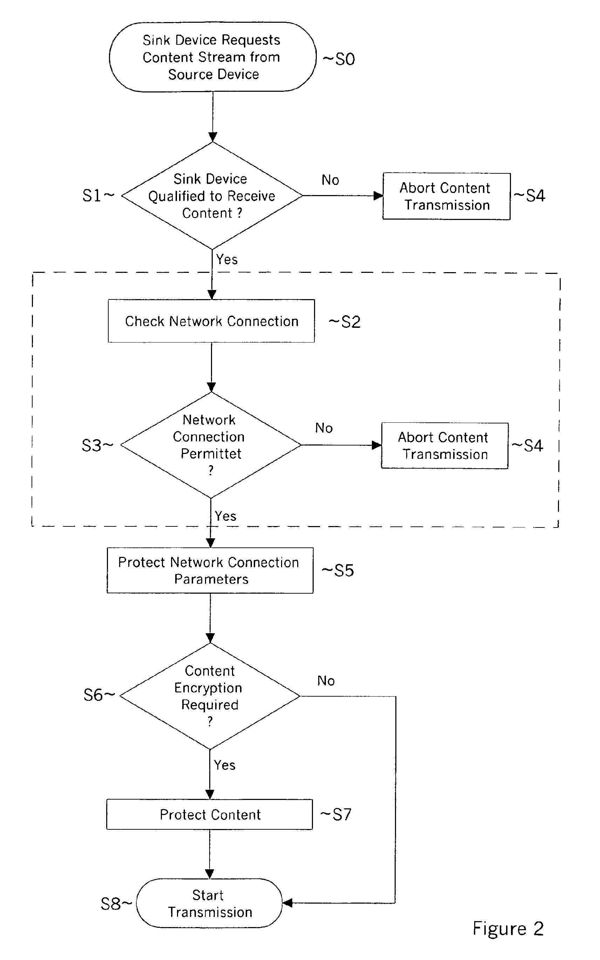

As part of a copy protection system, the source device 3 and the sink devices 4 and/or 5 will establish trust to exchange the content. This may be done by way of authentication and/or a key exchange for content encryption. As shown in Figure 2, the present invention indicated by the dashed line may constitute a part of this process of establishment of trust in a respective copy protection system.

Upon receiving a request for transmitting content in step S0 the source device which is defined as the device providing content to a network, first checks in step S1 that the sink device which is defmed as the device receiving the respective content via a network is qualified to receive the content. If this is the case, then the content transfer is allowed to proceed. If the receiving device is not qualified to receive the content, the content transfer would not be allowed to take place and aborted in step S4.

Copyright restrictions typically require that the right to use the content is restricted to the authorised user only. A duplication of the content within a sphere of a non-authorised user or a distribution of the content to such a user is not allowed. The content is required to remain within the domain of the authorised user. In the given case, the user's domain is represented by his personal private network, a LAN (Local Area Network) which is composed of a set of devices, owned e.g. by a given person or a household. According to the present invention, the network connection is checked in step S2 followed by step S3 verifying that both ends of the connection, the source device as well as the sink device are located within the same LAN. On a negative verification the content transmission is aborted in step S4. For positive verification the process continues with step S5 where the network connection parameters are protected against manipulation by circumvention methods and devices.

In step S6 it is checked if an encryption of the content is required and if so, the content stream is protected accordingly in step S7 before the content transmission is finally started in step S8. If no encryption is required, the process proceeds directly from step S6 to step S8.

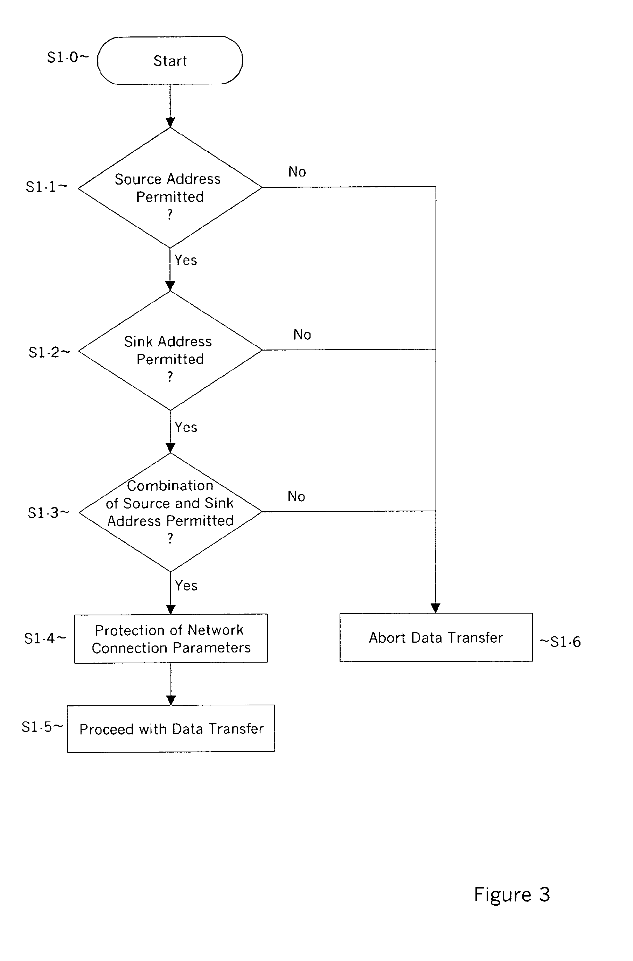

A more detailed representation of a method according to the present invention is given in Figure 3. After starting the procedure for instance in response to a data transmission request in step S1-0, the following step S1-1 is concerned with verifying the appropriateness of the local host acting as a source device for the data transmission. If it is detected, that the local host is connected to a public network or WAN (Wide Area Network), then a data transmission would not be permitted and aborted in step S1-6. In the other case, the appropriateness of the host acting as sink device for the respective data transfer is verified next in step S1-2. If it is detected hereby, that the sink device is not in the local network, then the data transfer would again not be permitted, which means it will be aborted in step S1-6. If the sink device is located in the local network, the appropriateness of the relative locations of the source and the destination device are eventually verified in step S1-3. This step may alternatively already be covered within step S1-2. If the sink device is not in the same local network as the source device, the data transmission will be aborted in step S1-6. Since the present invention is based on allowing or disallowing a data transfer according to the network address of both the source device and the sink device, these should be protected against manipulation by circumvention methods and devices, which is the content of step S1-4. Step S1-5 refers back to the procedure handling the data transfer.

What has been described above with reference to Figure 3 specifies the method according to the present invention in a general way. For an application of the method to a certain network like e.g. an IPv4 or IPv6 home network, the individual steps have to be concretised.

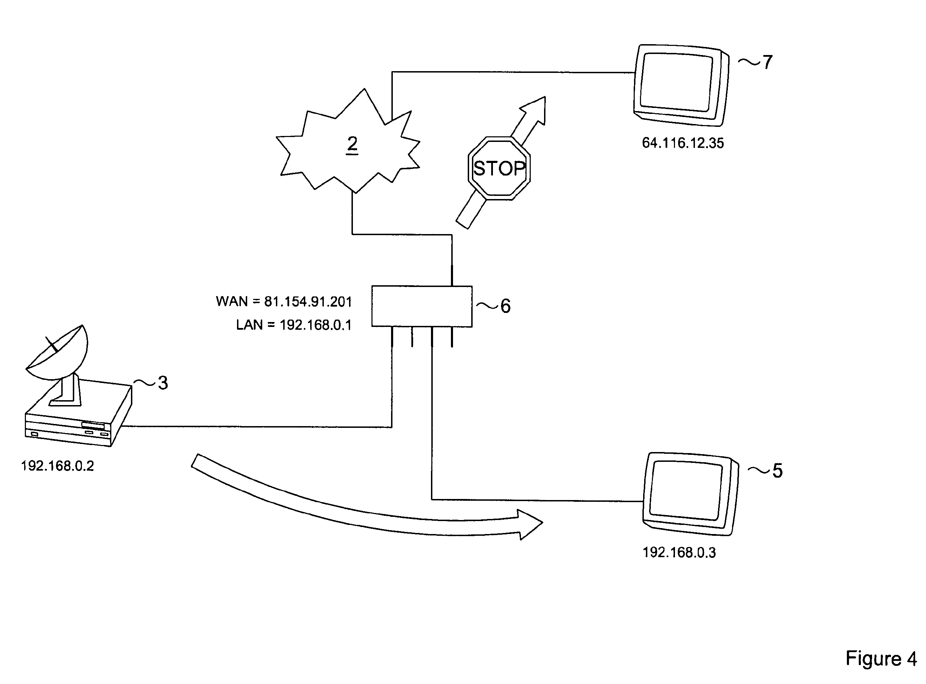

Figure 4 shows a predominant configuration for an IPv4 home network. A router 6 separates the home network from the access network 2, for instance a WAN or the Internet. When a user in the home network connects e.g. to the Internet, a connection to an Internet Service Provider (ISP) is established. The ISP hereby assigns a single IP address to the router. The router in turn automatically allocates IP addresses in the private range to devices connected in the home network, using DHCP (Dynamic Host Configuration Protocol). To comply with copyright protection and/or inhibiting any data transfer from the private network to an outside sink device, no data transmission will be routed outside of the local home network. Data traffic generated in the local network which is addressed to another local address will not be routed to the WAN or Internet. A transmission of data generated in the local network will only be allowed to hosts of the same local network.

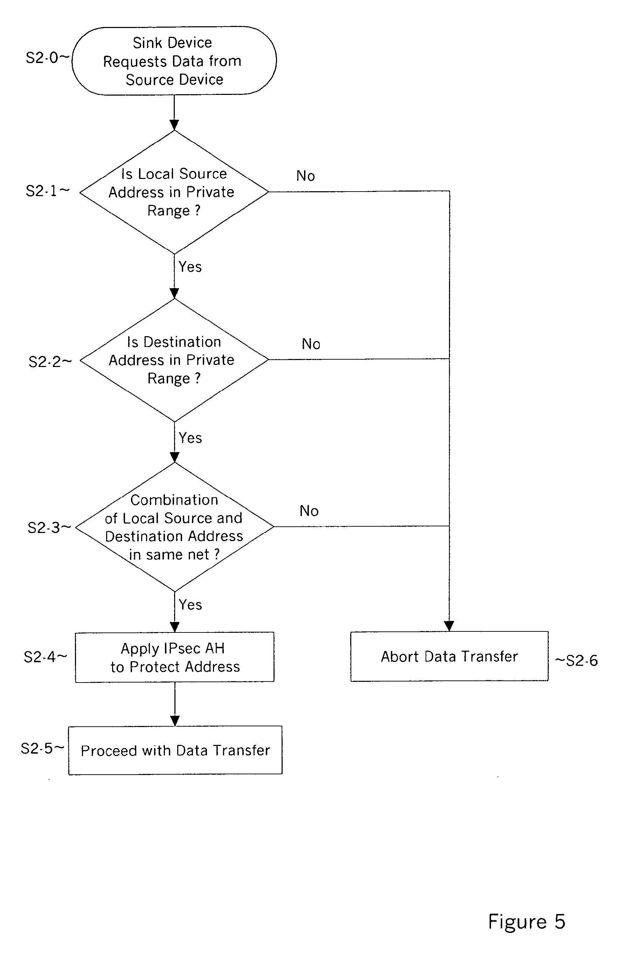

Figure 5 shows the specification of the present invention for an IPv4 unicast situation. The procedure starts with step S2-0 when a sink device requests data like for instance a content stream from a source device. The permissibility of the local source address, i.e. the network address of the source device in the local area network, is checked in step S2-1. For being permissible, the local source address must be in the private range, 192.168.0.0/16, as defined in "IETF RFC 3330, Special-Use IPv4 Addresses, September 2002" which is hereby included by reference. If the local source address is not in the private range, the data transmission is aborted in step S2-6.

As also the destination address, i.e. the network address of the sink device in the local area network, must be permissible, step S2-2 checks next, if it is in the private range. If the destination address is not in the private range, the data transmission is aborted in step S2-6.

For a unicast data transmission, the destination address must be in the same network or subnet as the local source address. Step S2-3 therefore checks if the local source address and the destination address are in the same network or subnet. If not, the data transmission is aborted in step S2-6. Broadcast and multicast data transmissions which include destinations outside the local home network and which will pass step S2-2 are now being confined to destination addresses within the network hosting the source device.

Before proceeding with further processes required to accomplish the data transfer in step S2-5, step S2-4 applies the IPsec Authentication Header protocol to prevent manipulation of local source and destination IP addresses. The IPsec Authentication Header protocol is described in "IETF RFC 2402, IP Authentication Header, November 1998", and hereby included by reference.

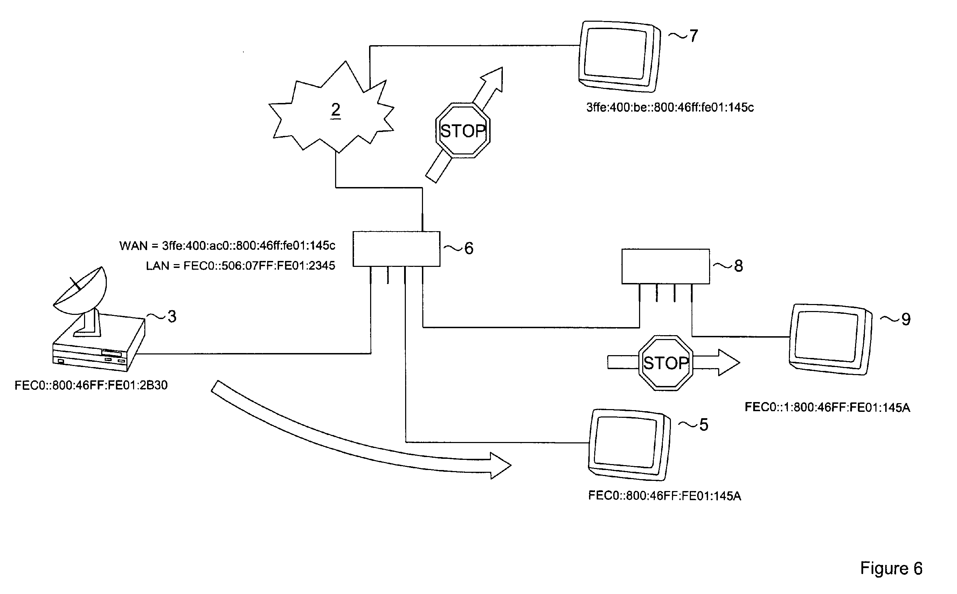

An application of the present invention to an IPv6 home network is illustrated in Figure 6. With IPv6 two classes of local addresses, link-local and site-local addresses have to be considered. Link-local addresses have the prefix FE80::s:i:j:m:n, where s is the 32-bit subnet number and i:j:m:n is the 64-bit interface number. Link-local addresses are unique only within one subnet. IP packets with a link-local address therefore not be passed on by routers. Site-local addresses characterised by the prefix FEC0:: s:i:j:m:n cannot be accessed from outside the local network but from different subnets within the local network. Data traffic generated for instance in a subnet of a local network which is addressed to another local address will not be routed to a different subnet or a WAN like e.g. Internet. A transmission of data generated in a subnet of a local network will only be allowed to hosts of the same subnet.

The representation of Figure 6 illustrates this situation. Data as for instance a content stream are generated by a satellite TV receiver 3 acting as a source device in a subnet with subnet number 0. When the content stream is requested by a sink device in the same subnet like e.g. the TV set 5 which is used to render the content stream, the data transfer is allowable and will be routed by router 6 accordingly. If the sink device is located in a different subnet, like the TV set 9 in the subnet with number 1, a respective data transfer via router 8 will be inhibited. Similarly a data transfer via router 6 to a sink device like the TV set 7 located in a public network 2 will be inhibited.

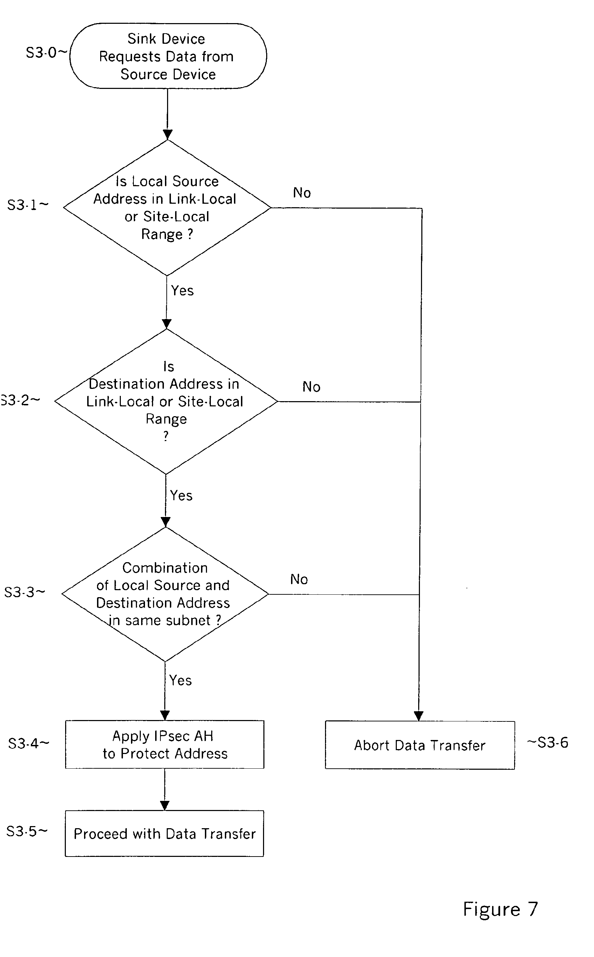

Figure 7 shows the specification of the present invention for an IPv6 unicast situation. The procedure starts with step S3-0 when a sink device requests data like for instance a content stream from a source device. First it is checked in step S3-1, if the local source address is in the link-local or site local unicast address range. If not, the data transmission is aborted in step S3-6. Else, the procedure continues with step S3-2, where the destination address is checked for being a link-local or a site-local address as this is required for a unicast transmission. A multicast transmission may be allowed within the local network, e.g. to a different subnet. If the destination address turns out to be of a different type, the data transmission is then aborted in step S3-6. Else, the next step S3-3 checks whether both, the source local and the destination address belong to the same subnet. This step may be bypassed for a multicast transmission. If they don't, the data transmission is subsequently aborted in step S3-6. Else, a manipulation of local source and destination address IP addresses may be prevented in step S3-4 by applying an IPsec Authentication Header protocol before the data transfer is continued in step S3-5.

## Claims

1. A method for enforcing a confinement of a data transfer to devices within a local area network (1), the method comprising the steps of:
- verifying on the occasion of a data request that the device providing the data and the device receiving the data are located within the same local area network,
- verifying that the network path established for the data transfer is located within the local area network, and
- effecting a data transfer if both verifications are valid.

2. A method according to claim 1,
**characterised in**
**that** the step for verifying that the device providing the data and the device receiving the data are located within the same network comprises the sub-steps of:
- identifying the source network address of the device providing the data,
- verifying (S1-1) that the source network address is a local area network address,
- identifying the destination network address of device being intended for receiving the data, and
- verifying (S1-2) that the destination network address is a local area network address.

3. A method according to claim 2,
**characterised in**
**that** the step for verifying that the device providing the data and the device receiving the data are located within the same network further comprises the sub-step (S1-3) of verifying that the source network address belongs to the same local area network than the destination network address.

4. A method according to claim 2 or 3,
**characterised in**
**that** a data transfer is inhibited on verifying that the source network address is not a local area network address or that the destination network address is not a local area network address.

5. A method according to one of the claims 3 to 4,
**characterised in**
**that** a data transfer is inhibited on verifying that the source network address and the destination network address belong to different networks or subnets within a local network.

6. A method according to one of the claims 1 to 5,
**characterised in**
**that** the method further includes a step (S1-4) for protecting the network connection parameters.

7. A method according to claim 6,
**characterised in**
**that** the step (S1-4) for protecting the network connection parameters includes an application of the IPsec Authentication Header protocol.

8. A method according to one of the claims 1 to 7,
**characterised in**
**that** in a first step, the data to be transferred are checked if they require a copy protection and if they do not require a copy protection, the data transfer is effected without a confinement to the local network.

9. A method according to one of the claims 1 to 8,
**characterised in**
**that** the local area network is a consumer domain network (1).

10. A data transfer confinement software program product comprising a series of physical state elements which are adapted to be processed by a data processing means of a network node such, that a method according to one of the claims 1 to 9 is implemented on the network.

11. A host (3, 4, 5) for use in a local area network, the host comprising
- a data providing means for providing data which transfer is to be confined to the local area network the host is connected to,
- a network connection parameter examination means for examining the admissibility of a network connection established for the data transfer according to a method of one of the claims 1 to 9.

12. A local area network (1) comprising a data transfer confinement means for confining a data transfer from a first node on the network to a second node on the network according to a method of one of the claims 1 to 9.
